(19) Europäisches Patentamt
European Patent Office
Office européen des brevets

(11) Veröffentlichungsnummer: **0 294 709 A2**

(12) # EUROPÄISCHE PATENTANMELDUNG

(21) Anmeldenummer: 88108845.4

(22) Anmeldetag: 03.06.88

(51) Int. Cl.4: C08G 63/18 , C08G 63/68

(30) Priorität: 12.06.87 DE 3719577

(43) Veröffentlichungstag der Anmeldung:
14.12.88 Patentblatt 88/50

(84) Benannte Vertragsstaaten:
DE FR GB IT

(71) Anmelder: BAYER AG
Konzernverwaltung RP Patentabteilung
D-5090 Leverkusen 1 Bayerwerk(DE)

(72) Erfinder: Heitz, Walter, Prof. Dr.
Am Schmidtborn 5
D-3575 Kirchhain(DE)
Erfinder: Brügging, Wilhelm, Dipl.-Chem.
Friedrich-Ebert-Strasse 111
D-3550 Marburg(DE)

(54) **Substituierte aromatische Polyester.**

(57) Die vorliegende Erfindung betrifft Polyester der Formel (I)

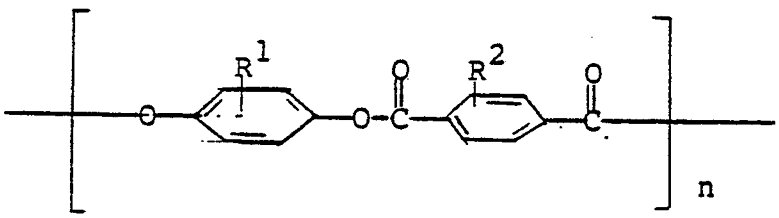

(I),

in welcher
$R^1$ und $R^2$ für $-CH_2-CH_2-Ar$ mit Ar einem aromatischen Rest oder einer dieser beiden Res für $-CH_2-CH_2-Ar$ und der andere für Alkyl, substituiertes Alkyl, Aryl oder Halogen steht und
n für eine ganz Zahl von 5 bis 2000,
sowie eine Verfahren zu deren Herstellung.

EP 0 294 709 A2

## Substituierte aromatische Polyester

Die Erfindung betrifft Polyester auf Basis von alkylarylsubstituierten Terephthalsäuren und alkylarylsubstituierten Hydrochinonen, ein Verfahren zu deren Herstellung sowie deren Verwendung zur Herstellung von molekular verstärkten Polymeren.

Bekanntlich sind verschiedene Polymere im allgemeinen nur begrenzt oder überhaupt nicht miteinander molekular mischbar. So können z.B. bei erhöhter Temperatur hergestellte Mischungen zweier verschiedener Polymerer beim Abkühlen sich in Domänen separieren. Dies gilt besonders für Mischungen flüssig-kristalliner Polymerer in anderen Polymeren.

Es wurde nun gefunden, daß speziell substituierte Polyester aus Hydrochinonen und Terephthalsäure mit vielen anderen Polymeren mischbar und verträglich sind und über einen weiten Temperaturbereich von -30 bis 250 °C homogene Lösungen und Mischungen miteinander bilden.

Gegenstand der Erfindung sind daher neue Polyester der Formel (I)

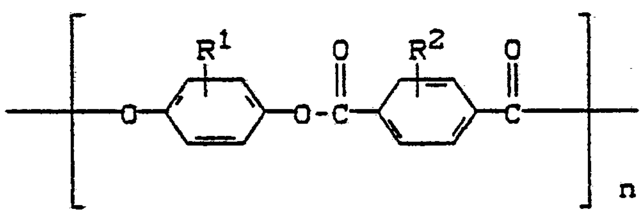

(I),

in welcher

$R^1$ und $R^2$ für $-CH_2-CH_2-Ar$ mit Ar einem aromatischen Rest oder einer dieser beiden Reste für $-CH_2-CH_2-Ar$ und der andere für Alkyl, substituiertes Alkyl, Aryl oder Halogen steht und

n für eine ganze Zahl von 5 bis 2000.

In den Resten $R^1$ und $R^2$ soweit sie für $CH_2-CH_2-Ar$ stehen, bedeutet Ar bevorzugt einen Arylrest mit 6 bis 12 Kohlenstoffatomen wie Phenyl, Naphthyl, Tolyl, Xylyl.

Soweit die Reste $R^1$ und $R^2$ Alkyl bedeuten, handelt es sich bevorzugt um $C_1$-$C_6$-Alkyl, wie Methyl, Ethyl, iso-Butyl, tert.-Butyl, soweit sie Aryl bedeuten ist Phenyl bevorzugt, soweit sie substituiertes Alkyl bedeuten ist Perfluoralkyl wie Trifluormethyl bevorzugt und bevorzugtes Halogen ist Chlor.

Die neuen Polyester haben Molekulargewichte $M_n$ von 2500 bis $10^6$, vorzugsweise von 5000 bis 500.000.

Ein weiterer Gegenstand der Erfindung ist ein Verfahren zur Herstellung der Polyester der Formel (I), das dadurch gekennzeichnet ist, daß man

a) Hydrochinone der Formel (II)

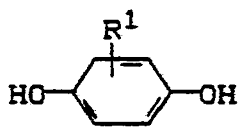

(II)

in welcher $R^1$ die bei Formel (I) angegebene Bedeutung hat,

mit Terephthalsäurederivaten, wie den Halogeniden, der Formel (III)

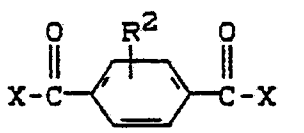

(III)

in welcher

$R^2$ die bei Formel (I) angegebene Bedeutung hat und

X für Halogen wie Cl, Br steht,

gegebenenfalls in üblichen organischen Lösungsmitteln bei Temperaturen von 0 bis 300 °C, vorzugsweise 20 bis 250 °C gegebenenfalls in Gegenwart von mindestens äquivalenten Mengen eines tert.-Amins

(bezogen auf das Terephthalsäurederivat der Formel (III) umsetzt oder

b) acylierte Hydrochinone der Formel (IV)

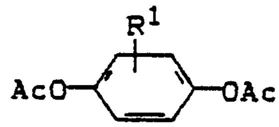

(IV),

in welcher
$R^1$ die bei Formel (I) angegebenen Bedeutung hat und
Ac für $C_1$-$C_{10}$-Alkyl-CO-steh,
mit Terephthalsäuren der Formel (V)

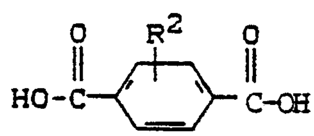

(V),

worin $R^2$ die bei Formel (I) angegebenen Bedeutung hat,
gegebenenfalls in üblichen organischen Lösungsmitteln bei Temperaturen von 50 bis 350 °C oder in der Schmelze in Abwesenheit von Lösungsmitteln bei Temperaturen von 50 bis 400 °C miteinander umsetzt oder

c) Hydrochinone der Formel (II) mit Estern, vorzugsweise Arylestern oder Terephthalsäure der Formel (VI)

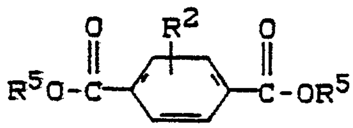

(VI),

in welcher
$R^5$ für $C_1$-$C_4$-Alkyl, $C_6$-$C_{24}$-Aryl, $C_7$-$C_{30}$-Aralkyl bzw. -Alkylaryl, vorzugsweise $C_6$-$C_{24}$-Aryl, steht, und $R^2$ die oben angegebene Bedeutung hat
in Gegenwart üblicher Umesterungskatalysatoren in üblichen Lösungsmitteln, gegebenenfalls bei einem Unterdruck von 0,1 bis $10^{-4}$ bar, umsetzt.

Als übliche organische Lösungsmittel für Methoden a, b und c kommen in Betracht z.B. chlorierte Kohlenwsasserstoffe wie Tetrachlorkohlenstoff, Perchlorethylen, Chloroform, Dichlormethan, aromatische Lösungsmittel wie Toluol, Diphenylether, Chlornaphthalin, Diphenylsulfon, Ketone wie Aceton, Butanon.

Methode a) kann in Anwesenheit von Basen durchgeführt werden. Bei Basenzusatz sollen tertiäre Amine in mindestens äquivalenten Mengen bezogen auf das Terephthalhalogenid, zugegen sein, z.B. Pyridin, Triethylamin usw.. Gegebenenfalls kann das tertiäre Amin als Lösungsmittel eingesetzt werden.

Die Lösung des Terephthaloylhalogenide z.B. in Toluol wird in die Lösung des substituierten Hydrochinons in z.B. Toluol/Pyridin zugetropft und die Lösung anschließend auf Temperaturen von z.B. 100 °C für eine Stunde erhitzt. Das Polymere wird abfiltriert und durch Waschen mit Wasser und Alkohol (z.B. Methanol) von organischen Lösungmitteln und von Salzen befreit.

Bei Methode c) soll ein üblicher Katalysator, der Umesterungsreaktionen beeinflussen kann, im Reaktionsgemisch in Mengen von 0,001 bis 0,1 mol bezogen auf Terephtalsäureester der Formel (VI) im Reaktionsgemisch anwesend sein. Es können übliche Umesterungskatalysatoren, z.B. Metallsalze und Verbindungen wie Manganacetat, Zinkchlorid, Titantetrapropylat, Zinndibutyldilaurat oder Katalysatorkombinationen wie Zirkontetrapropylat/4-Dimethylaminopyridin oder Metalle wie Magnesium verwendet werden. Die Reaktion wird in hochsiedenden Lösungsmitteln, wie Naphthalinmethylether, vorzugsweise aber ohne Lösungsmittel durchgeführt. Die Reaktionskomponenten werden auf etwa 300 °C, vorzugsweise bis dicht unter den Schmelzpunkt des sich bildenden Polymeren, für 1 bis 5 Stunden erhitzt und bei vermindertem Druck bei 280 bis 350 °C nachkondensiert. Pro Mol Hydrochinon der Formel (II) werden etwa 1 Mol Terephthalsäure der Formel (V) eingesetzt.

Die Polymerisationsreaktionen a, b und c können auf übliche Art durchgeführt werden.

Die erfindungsgemäßen Polymeren können zu den flüssigkristallinen Polymeren gerechnet werden. Sie sind jedoch nicht wie bekannte flüssig-kristalline Polymere hochkristallin, schwerlöslich und schlecht mit anderen Polymeren verträglich.

Die erfindungsgemäßen Polymeren können vielmehr in Mengen von 0,5 bis 20 Gew.-% (bezogen auf das abzumischende andere Polymere) in anderen Polymeren (molekular dispers) gelöst sein.

Die erfindungsgemäßen Polymeren können in eine Vielzahl anderer Polymerer eingearbeitet werden, z.B. in Polycarbonate, Polyepoxide, ABS, Polyphenylensulfid, Polyetheretherketone, Polyamide, Polyester, Polyethylen, PVC, Polyurethane, ABN, Kautschuke und Ethylenvinylacetat-Copolymerisat.

Zur Einarbeitung der erfindungsgemäßen Polymeren können diese mit den abzumischenden Polymeren, z.B. nach vermahlen auf höhere Temperaturen bis ca. 400 °C erhitzt werden. Beim Abkühlen auf Raumtemperatur wird dann eine homogene Mischung (Legierung) erhalten.

Die mit den erfindungsgemäßen Polymeren hergestellten Polymermischungen haben ausgezeichnete Wärmeformbeständigkeit über einen weiten Temperaturbereich von -100 bis ca. 200 °C, gute Kerbschlagzähigkeiten, Elastizitätsmodule, hohe Kratzfestigkeit und ausgezeichnete Scherfestigkeit.

Weiterhin können die erfindungsgemäßen Polyester der Formel (I), z.B. in einen Monomeren wie Styrol, Methylstyrol, Methylmethacrylat, Epoxide, Diisocyanate/Diolsysteme oder Monomermischungen wie Styrol/Acrylnitrile usw. gelöst werden, anschließend wird dieses dann polymerisiert. Die Polymerisation der Monomeren erfolgt unter üblichen Bedingungen. So werden Vinylmonomere durch Zusatz von radikalischen Initiatoren, Epoxide durch Zusatz von Polyaminen Diisocyanat/Diolsysteme durch Zusatz von Zinnkatalysatoren polymerisiert. Es entsteht eine gute Polymer/Polymer-Mischung. Weiterhin können die Mischungen auch über ein gemeinsames Lösungsmittel erfolgen.

Aufgrund ihres Eigenschaftsprofils können derartige Mischungen einer Vielzahl von möglichen Verwendungen zugeführt werden, z.B. zur Herstellung von Werkstoffen, Spritzgußtypen, Folien, Filmen, Fasern und Fäden usw.

Beispiel 1

Darstellung eines Polyesters aus 1(2-Phenyl)-ethylterephthaloyldichlorid und 1(2-Phenyl)-ethylhydrochinon durch Schmelzkondensation.

1.1753 g ($\triangleq$ 3.826 mmol) 1(2-Phenyl)ethylterephthaloyldichlorid und 0.8178 g ($\triangleq$ 3.817 mmol) 1(2-Phenyl)ethylhydrochinon wurden in einen ausgeheizten und mit Stickstoff gespülten 50 ml Stickstoffkolben mit Blasenzähler und Magnetrührstab gegeben. Die Reaktionsmischung wurde unter kontinuierlichem Rührenbei schwachem Stickstoffstrom auf 100 °C erhitzt. Hierbei trat rege Gasentwicklung auf. Nach 2 h Reaktionszeit war die homogene Reaktionsmischung hochviskos. Die Temperatur wurde auf 160 °C gesteigert und 1,5 h gehalten. Anschließend Temperaturerhöhung auf 250 °C. Nach 1 h bei dieser Temperatur wurde auf Raumtemperatur abgekühlt, Ölpumpenvakuum ($10^{-2}$ Torr) angelegt und langsam wieder auf 250 °C aufgeheizt. Diese Temperatur wurde 4 h beibehalten und der Versuch anschließend abgebrochen.

Rohausbeute: 1.68 g $\triangleq$ (97,7 % d. Th.)

Das Rohprodukt wurde vollständig in ca. 50 ml Chloroform gelöst und in 600 ml Methanol gefällt. Der zurückgewonnene, getrocknete Niederschlag war schwach gelb gefärbt und wog 1.65 g (95.9 % d. Th.).

Viskositätsmessungen am umgefällten Produkt ergaben folgende Werte:

$\eta_{inh}$ = 2.20 (P-Chlorphenol, 45 °C), $\eta_{inh}$ = 2.29 (Chloroform, 45 °C)

Beispiel 2

Darstellung eines Polyesters aus 1(2-Phenyl)-ethylterephthaloyldichlorid une 1(2-Phenyl)-ethylhydrochinon durch Polykondensation in Lösung.

20.0 g Diphenylether, 1.0985 g ($\triangleq$ 3.576 mmol) 1(2-Phenyl)-ethylterephthaloyldichlorid und 0.7658 g ($\triangleq$ 3.574 mmol) 1(2-Phenyl)ethylhydrochinon wurden in einen ausgeheizten und mit Stickstoff gespülten 50 ml Stickstoffkolben mit Magnetrührstab, Rückflußkühler und aufgesetztem Blasenzähler gegeben. Die

Reaktionsmischung wurde unter kontinuierlichem Rühren bei schwachem Stickstoffstrom auf 180 °C erhitzt (Gasentwicklung). Nach 1 h wurde die Reaktionstemperatur langsam auf 250 °C gesteigert. Die Temperatur wurde 5,5 h beibehalten und die Reaktion anschließend abgebrochen. Die Reaktionslösung war während der gesamten Reaktionszeit homogen und rührbar. Die bei Raumtemperatur feste Reaktionsmischung wurde in ca. 20 ml Chloroform gelöst und das Polymer in 600 ml Methanol ausgefällt. Der Polymerniederschlag wurde abfiltriert, gewaschen, getrocknet und erneut umgefällt (100 ml Chloroform/1000 ml Methanol). Die Ausbeute beträgt 1.55 g (96.8 % d. Th.). Das Produkt besitzt eine inhärente Viskosität von $\eta_{inh}$ = 1.42 (Chloroform, 45 °C).

**Ansprüche**

1) Polyester der Formel (I)

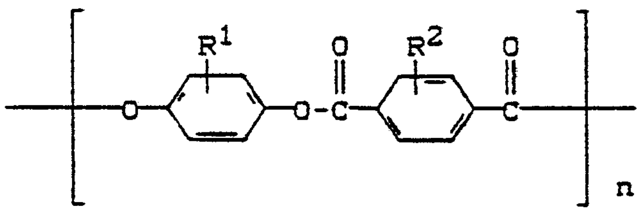

(I),

in welcher
$R^1$ und $R^2$ für $-CH_2-CH_2-Ar$ mit Ar einem aromatischen Rest oder einer dieser beiden Reste für $-CH_2-CH_2-Ar$ und der andere für Alkyl, substituiertes Alkyl, Aryl oder Halogen steht und
n für eine ganze Zahl von 5 bis 2000.

2. Verfahren zur Herstellung der Polyester der Formel (I) gemäß Anspruch 1, dadurch gekennzeichnet, daß man

a) Hydrochinone der Formel (II)

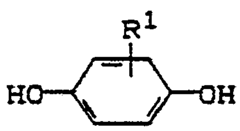

(II),

in welcher $R^1$ die bei Formel (I) angegebene Bedeutung hat,
mit Terephthalsäurederivaten, wie den Halgeniden, der Formel (III)

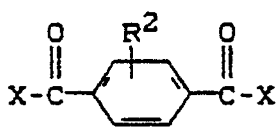

(IX),

in welcher
$R^2$ die bei Formel (I) angegebene Bedeutung hat und
X für Halogen steht,
gegebenenfalls in üblichen organischen Lösungsmitteln bei Temperaturen von 0 bis 300 °C, Vorzugsweise 20 bis 250 °C in Gegenwart von mindestens äquivalenten Mengen eines tert.-Amins (bezogen auf das Terephthalsäurederivat der Formel (III) umsetzt oder

b) acylierte Hydrochinone der Formel (IV)

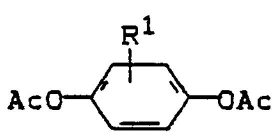

(IV),

in welcher
$R^1$ die bei Formel (I) angegebene Bedeutung hat und
Ac für $C_1$-$C_{10}$-Alkyl-CO- steht
mit Terephthalsäuren der Formel (V)

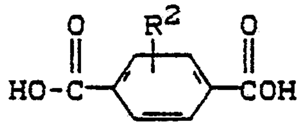

(V),

worin $R^2$ die oben angegebene Bedeutung hat,
gegebenenfalls in üblichen organischen Lösungsmitteln bei Temperaturen von 50 bis 350 °C oder in der Schmelze in Abwesenheit von Lösungsmitteln bei Temperaturen von 50 bis 400 °C miteinander umsetzt oder

c) Hydrochinone der Formel (II) mit Estern, vorzugsweise Arylestern der Terephthalsäure der Formel (VI)

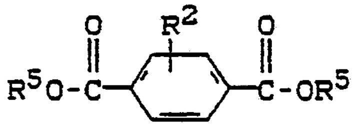

(VI),

in welcher
$R^5$ für $C_1$-$C_4$-Alkyl, $C_6$-$C_{24}$-Aryl, $C_7$-$C_{30}$-Aralkyl, -Alkylaryl steht, und $R^2$ die oben angegebene Bedeutung hat,
in Gegenwart üblicher Umesterungskatalysatoren in üblichen Lösungsmitteln, gegebenenfalls bei einem Unterdruck von 0,1 bis $10^{-4}$ bar, umsetzt.

3) Verwendung von Polyestern des Anspruchs 1 zur Abmischung mit anderen Polymeren, gegebenenfalls als Zusatz zur polymerisierenden Monomerlösung bei der Herstellung des Polymeren.

4) Mischungen aus Polyestern des Anspruchs 1 mit anderen Polymeren.